(19) Europäisches Patentamt
European Patent Office
Office européen des brevets

(11) **EP 3 384 663 B1**

(12) **EUROPEAN PATENT SPECIFICATION**

(45) Date of publication and mention
of the grant of the patent:
**22.04.2020 Bulletin 2020/17**

(21) Application number: **16822264.4**

(22) Date of filing: **22.11.2016**

(51) Int Cl.:
***H04M 3/523*** *(2006.01)*

(86) International application number:
**PCT/IB2016/001776**

(87) International publication number:
**WO 2017/093799 (08.06.2017 Gazette 2017/23)**

(54) **TECHNIQUES FOR HYBRID BEHAVIORAL PAIRING IN A CONTACT CENTER SYSTEM**

TECHNIKEN FÜR EIN HYBRID-VERHALTENSBASIERTES ANRUFVERTEILUNGSSYSTEM IN EINEM CALL CENTER

TECHNIQUES POUR UN UN SYSTÈME DE DISTRIBUTION D'APPELS DANS UN CENTRE D'APPEL, PARTIELLEMENT BASÉ SUR LE COMPORTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2015 US 201514956074**

(43) Date of publication of application:
**10.10.2018 Bulletin 2018/41**

(73) Proprietor: **Afiniti Europe Technologies Limited
Altrincham, Cheshire WA14 2DT (GB)**

(72) Inventors:
• **CHISHTI, Zia
Washington
DC 20005 (US)**
• **KHATRI, Vikash
Alexandria, Virginia 22310 (US)**

(74) Representative: **Brunner, John Michael Owen
Carpmaels & Ransford LLP
One Southampton Row
London WC1B 5HA (GB)**

(56) References cited:
WO-A2-2010/053701          US-A1- 2009 190 740
US-A1- 2009 323 921        US-A1- 2010 111 285
US-A1- 2010 111 287        US-A1- 2013 251 137
US-A1- 2014 341 370

## Description

## FIELD OF THE DISCLOSURE

This disclosure generally relates to contact centers and, more particularly, to techniques for hybrid behavioral pairing in a contact center system.

## BACKGROUND OF THE DISCLOSURE

A typical contact center algorithmically assigns contacts arriving at the contact center to agents available to handle those contacts. At times, the contact center may have agents available and waiting for assignment to inbound or outbound contacts (*e.g.,* telephone calls, Internet chat sessions, email) or outbound contacts. At other times, the contact center may have contacts waiting in one or more queues for an agent to become available for assignment.

In some typical contact centers, contacts are assigned to agents ordered based on time of arrival. This strategy may be referred to as a "first-in, first-out", "FIFO", or "round-robin" strategy. In some contact centers, contacts or agents are assigned into different "skill groups" or "queues" prior to applying a FIFO assignment strategy within each such skill group or queue. These "skill queues" may also incorporate strategies for prioritizing individual contacts or agents within a baseline FIFO ordering. For example, a high-priority contact may be given a queue position ahead of other contacts who arrived at an earlier time, or a high-performing agent may be ordered ahead of other agents who have been waiting longer for their next call. Regardless of such variations in forming one or more queues of callers or one or more orderings of available agents, contact centers typically apply FIFO to the queues or other orderings. Once such a FIFO strategy has been established, assignment of contacts to agents is automatic, with the contact center assigning the first contact in the ordering to the next available agent, or assigning the first agent in the ordering to the next arriving contact. In the contact center industry, the process of contact and agent distribution among skill queues, prioritization and ordering within skill queues, and subsequent FIFO assignment of contacts to agents is managed by a system referred to as an "Automatic Call Distributor" ("ACD").

Some contact centers may use a "priority queuing" or "PQ" approach to ordering the queue of waiting contacts. For example, the ordering of contacts waiting for assignment to an agent would be headed by the highest-priority waiting contact (*e.g.,* the waiting contact of a type that contributes to the highest sales conversion rate, the highest customer satisfaction scores, the shortest average handle time, the highest performing agent for the particular contact profile, the highest customer retention rate, the lowest customer retention cost, the highest rate of first-call resolution). PQ ordering strategies attempt to maximize the expected outcome of each contact-agent interaction but do so typically without regard for utilizing contacts in a contact center uniformly. Consequently, lower-priority contacts may experience noticeably longer waiting times.

In view of the foregoing, it may be understood that there is a need for a system that both attempts to utilize agents more evenly than PQ while improving contact center performance beyond what FIFO strategies deliver.

US 2014/341370 A1 discloses a method for pairing contacts and agents in a contact center using a hybrid call routing scheme.

US 2013/251137 A1 discloses a method comprising: obtaining agent parameter data for a set of agents; ranking or percentiling the agents based at least in part on the agent parameter data, to obtain an agent distribution of agent rankings or percentiles; partitioning callers in a set of callers based on one or more criteria into a set of partitions; obtaining caller propensity data for the respective partitions; ranking or percentiling the callers based at least in part on data relating to or predicting a caller propensity for a desired outcome based at least in part on the caller propensity data for the partitions of the respective callers, to obtain a caller distribution of caller rankings or percentiles; and matching a respective one of the agents with a respective ranking or percentile to a respective one of the callers in one of the partitions with a closest respective ranking or percentile.

## SUMMARY OF THE DISCLOSURE

The invention is defined by the appended claims.

## BRIEF DESCRIPTION OF THE DRAWINGS

In order to facilitate a fuller understanding of the present disclosure, reference is now made to the accompanying drawings, in which like elements are referenced with like numerals. These drawings should not be construed as limiting the present disclosure, but are intended to be illustrative only.

FIG. 1 shows a block diagram of a contact center according to embodiments of the present disclosure.
FIG. 2 shows a schematic representation of a queue according to embodiments of the present disclosure.
FIG. 3 shows a schematic representation of a queue according to embodiments of the present disclosure.
FIG. 4 shows a schematic representation of a queue according to embodiments of the present disclosure.
FIG. 5 shows a schematic representation of a queue according to embodiments of the present disclosure.
FIG. 6 shows a schematic representation of a queue according to embodiments of the present disclosure.
FIG. 7 shows a schematic representation of a queue according to embodiments of the present disclosure.
FIG. 8 shows a flow diagram of a hybrid behavioral pairing method according to embodiments of the present disclosure.

## DETAILED DESCRIPTION

A typical contact center algorithmically assigns contacts arriving at the contact center to agents available to handle those contacts. At times, the contact center may be in an "L1 state" and have agents available and waiting for assignment to inbound or outbound contacts (*e.g.,* telephone calls, Internet chat sessions, email). At other times, the contact center may be in an "L2 state" and have contacts waiting in one or more queues for an agent to become available for assignment. Such L2 queues could be inbound, outbound, or virtual queues. Contact center systems implement various strategies for assigning contacts to agents in both L1 and L2 states.

The present disclosure generally relates to contact center systems, traditionally referred to as "Automated Call Distribution" ("ACD") systems. Typically, such an ACD process is subsequent to an initial "Skills-based Routing" ("SBR") process that serves to allocate contacts and agents among skill queues within the contact center. Such skill queues may distinguish contacts and agents based on language capabilities, customer needs, or agent proficiency at a particular set of tasks.

The most common traditional assignment method within a queue is "First-In, First-Out" or "FIFO" assignment wherein the longest-waiting contact is assigned to the longest-waiting agent. Some contact centers implement "priority queuing" ("PQ") wherein the next available agent is assigned to the highest-priority contact. Variations of both such assignment methods commonly exist.

Variations of FIFO typically target "fairness" inasmuch as they are designed to balance the allocation ("utilization") of contacts to agents over time. PQ variations of FIFO adopt a different approach in which the allocation of contacts to agents is purposefully skewed to increase the utilization of higher-priority contacts and reduce the utilization of lower-priority contacts. PQ may do so despite potential negative impacts on lower-priority contacts.

The present disclosure refers to optimized strategies for assigning contacts to agents that improve upon traditional assignment methods, such as "Behavioral Pairing" or "BP" strategies. Behavioral Pairing targets balanced utilization of both agents and contacts within queues (e.g., skill queues) while simultaneously improving overall contact center performance potentially beyond what FIFO or similar methods will achieve in practice. This is a remarkable achievement inasmuch as BP acts on the same contacts and same agents as FIFO, approximately balancing the utilization of contacts as FIFO provides, while improving overall contact center performance beyond what FIFO provides in practice.

BP improves performance by assigning agent and contact pairs in a fashion that takes into consideration the assignment of potential *subsequent* agent and contact pairs such that when the benefits of *all* assignments are aggregated they may exceed those of FIFO and PQ strategies. In some cases, BP results in instant contact and agent pairings that may be the reverse of what FIFO or PQ would indicate. For example, in an instant case BP might select the shortest-waiting contact or the lowest-performing available agent. BP respects "posterity" inasmuch as the system allocates contacts to agents in a fashion that inherently forgoes what may be the highest-performing selection at the *instant moment* if such a decision increases the probability of better contact center performance *over time.*

As explained in detail below, embodiments of the present disclosure relate to techniques for "hybrid behavioral pairing" ("HBP"), which combines strategies of BP with strategies of priority queuing, in a manner in which a contact center administrator may adjust a balance between the two. For example, a contact center administrator may choose to have BP be the dominant mechanism for assigning contacts from within a queue with a bias toward PQ. Instead of targeting a balanced contact utilization, HBP may target a skewed contact utilization. In some configurations, this bias or skew may be slight; for example, an HBP strategy may be calibrated to reduce or limit the number of occasions in which any one type of contact in a queue (*e.g.,* skill queue) is assigned to more than one agent pairing before other types of contacts in the queue.

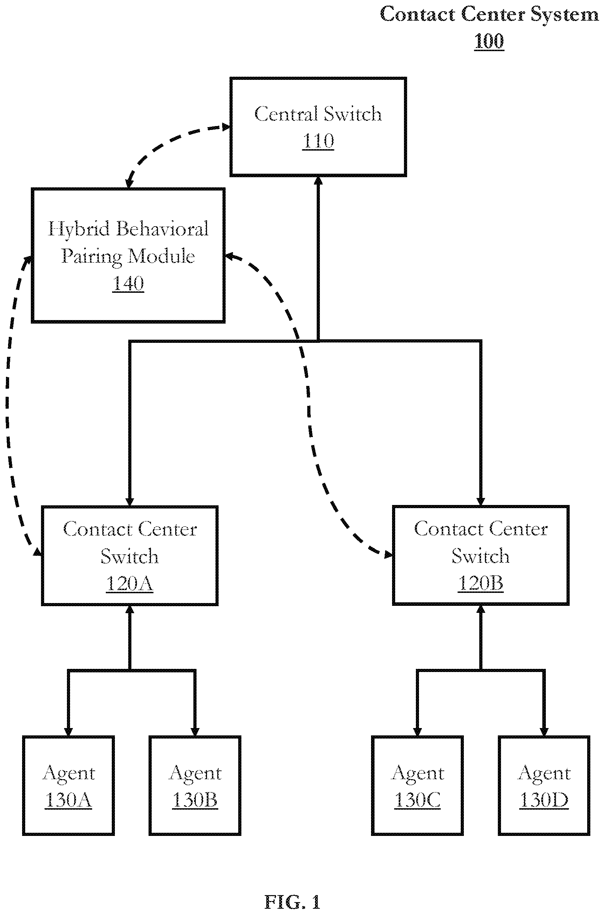

FIG. 1 shows a block diagram of a contact center system 100 according to embodiments of the present disclosure. The description herein describes network elements, computers, and/or components of a system and method for simulating contact center systems that may include one or more modules. As used herein, the term "module" may be understood to refer to computing software, firmware, hardware, and/or various combinations thereof. Modules, however, are not to be interpreted as software which is not implemented on hardware, firmware, or recorded on a processor readable recordable storage medium (*i.e.,* modules are not software *per se*). It is noted that the modules are exemplary. The modules may be combined, integrated, separated, and/or duplicated to support various applications. Also, a function described herein as being performed at a particular module may be performed at one or more other modules and/or by one or more other devices instead of or in addition to the function performed at the particular module. Further, the modules may be implemented across multiple devices and/or other components local or remote to one another. Additionally, the modules may be moved from one device and added to another device, and/or may be included in both devices.

As shown in FIG. 1, the contact center system may include a central switch 110. The central switch 110 may receive incoming contacts (e.g., callers) or support outbound connections to contacts via a dialer, a telecommunications network, or other modules (not shown). The central switch 110 may include contact routing hardware and software for helping to route contacts among one or more contact centers, or to one or more PBX/ACDs or other queuing or switching components within a contact center.

The central switch 110 may not be necessary if there is only one contact center, or if there is only one PBX/ACD routing component, in the contact center system 100. If more than one contact center is part of the contact center system 100, each contact center may include at least one contact center switch (*e.g.,* contact center switches 120A and 120B). The contact center switches 120A and 120B may be communicatively coupled to the central switch 110.

Each contact center switch for each contact center may be communicatively coupled to a plurality (or "pool") of agents. Each contact center switch may support a certain number of agents (or "seats") to be logged in at one time. At any given time, a logged-in agent may be available and waiting to be connected to a contact, or the logged-in agent may be unavailable for any of a number of reasons, such as being connected to another contact, performing certain post-call functions such as logging information about the call, or taking a break.

In the example of FIG. 1, the central switch 110 routes contacts to one of two contact centers via contact center switch 120A and contact center switch 120B, respectively. Each of the contact center switches 120A and 120B are shown with two agents each. Agents 130A and 130B may be logged into contact center switch 120A, and agents 130C and 130D may be logged into contact center switch 120B.

The contact center system 100 may also be communicatively coupled to an integrated service from, for example, a third party vendor. In the example of FIG. 1, hybrid behavioral pairing module 140 may be communicatively coupled to one or more switches in the switch system of the contact center system 100, such as central switch 110, contact center switch 120A, or contact center switch 120B. In some embodiments, switches of the contact center system 100 may be communicatively coupled to multiple hybrid behavioral pairing modules. In some embodiments, hybrid behavioral pairing module 140 may be embedded within a component of a contact center system (*e.g.,* embedded in or otherwise integrated with a switch).

The hybrid behavioral pairing module 140 may receive information from a switch (*e.g.,* contact center switch 120A) about agents logged into the switch (*e.g.,* agents 130A and 130B) and about incoming contacts via another switch (*e.g.,* central switch 110) or, in some embodiments, from a network (*e.g.,* the Internet or a telecommunications network) (not shown).

The hybrid behavioral pairing module 140 may process this information and to determine which contacts should be paired (*e.g.,* matched, assigned, distributed, routed) with which agents. For example, multiple agents are available and waiting for connection to a contact (L1 state), and a contact arrives at the contact center via a network or central switch. As explained below, without the hybrid behavioral pairing module 140 or similar behavioral pairing module, a contact center switch will typically automatically distribute the new contact to whichever available agent has been waiting the longest amount of time for an agent under a "fair" FIFO strategy, or whichever available agent has been determined to be the highest-performing agent under another strategy such as a performance-based routing ("PBR") strategy.

With the hybrid behavioral pairing module 140 or a similar behavioral pairing module, contacts and agents may be given scores (*e.g.,* percentiles or percentile ranges/bandwidths) according to a pairing model or other artificial intelligence data model, so that a contact may be matched, paired, or otherwise connected to a preferred agent. In some embodiments, the hybrid behavioral pairing module 140 may be configured with an HBP strategy that blends the BP and PBR strategies, targeting biased rather than balanced agent utilization.

In an L2 state, multiple contacts are available and waiting for connection to an agent, and an agent becomes available. These contacts may be queued in a contact center switch such as a PBX or ACD device ("PBX/ACD"). Without the hybrid behavioral pairing module 140 or a similar behavioral pairing module, a contact center switch will typically connect the newly available agent to whichever contact has been waiting on hold in the queue for the longest amount of time as in a "fair" FIFO strategy or a PBR strategy when agent choice is not available. In some contact centers, priority queuing may also be incorporated.

With the hybrid behavioral pairing module 140 or similar behavioral pairing module in an L2 scenario, as in the L1 state described above, contacts and agents may be given percentiles (or percentile ranges/bandwidths, etc.) according to, for example, a model, such as an other artificial intelligence model, so that an agent coming available may be matched, paired, or otherwise connected to a preferred contact.

Under the HBP strategy, a hybridization factor or function is applied to one or more orderings of contacts to achieve the desired balance between a BP strategy, which targets a balanced utilization, and a PQ strategy, which targets a highly skewed utilization during periods of time when a contact center is in an L2 state (*i.e.,* multiple contacts waiting for assignment).

In some embodiments, a hybridization function may combine two (or more) orderings or other types of ranking systems together. For example, a contact center may have four contacts of different types: Contact A, Contact B, Contact C, and Contact D ("A", "B", "C", and "D") available for pairing with an agent. The contacts may be ordered according to multiple ordering systems. For example, under a typical FIFO strategy, the contacts may be ordered according to how long each contact has been waiting for an assignment relative to the other contacts. Under a typical priority queuing strategy, the contacts may be ordered according to how well each contact contributes to performance for some metric relative to the other contacts. Under a BP strategy, the contact may be ordered according to the quality of each contact's "behavioral fit" relative to the other contacts.

One technique for combining two orderings is to determine a sum. For example, if a PQ strategy orders the four contacts as A=1, B=2, C=3, and D=4, the PQ strategy would preferably pair highest-"performing" Contact A with the next agent. And if a BP strategy order the contacts as A=4, B=2, C=3, D=1, the BP strategy would preferably pair best-fitting Contact D with the next agent. In this example of an HBP strategy, the sum of the two orderings would be A=5, B=4, C=6, D=5. This HBP strategy would preferably pair Contact B (which is the second highest-performing and second best-fitting contact according to the original orderings) with the next agent.

Other embodiments may use other techniques for combining multiple orderings of contacts. For example, the HBP ordering may be a product obtained by multiplying two or more orderings. For another example, the HBP ordering may be a weighted sum or product obtained by scaling the one or more of the orderings by a scaling factor. In this way, HBP may be configured to weight a contact's relative performance more or less than the contact's relative behavioral fit.

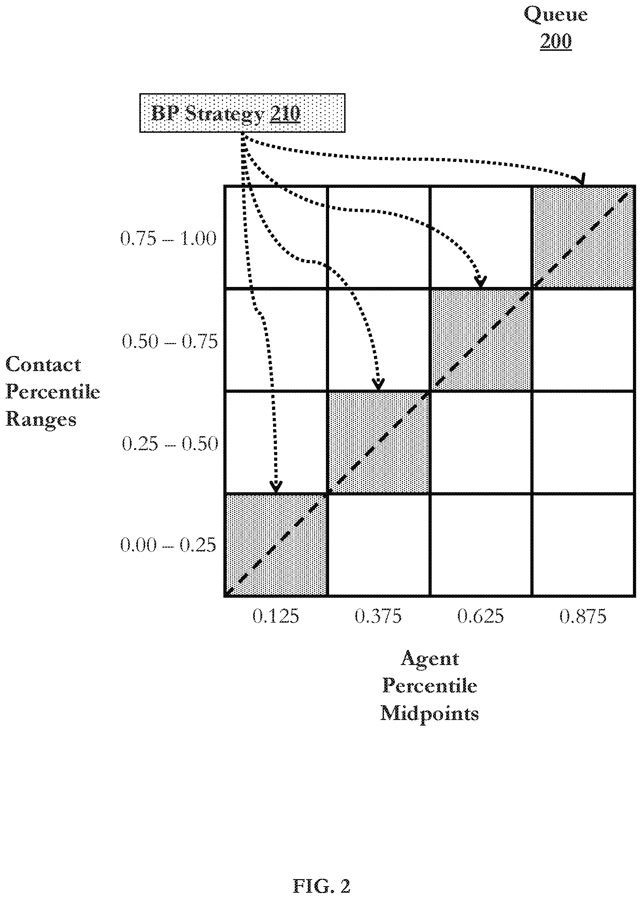

FIG. 2 shows a queue 200 according to embodiments of the present disclosure operating under BP Strategy 210. Queue 200 represents a simplified hypothetical case in which four types of contacts may be assigned to any of four agents in an environment in which the contact center is seeking to maximize a desired metric (e.g., sales). The four evenly distributed types of contacts are assigned percentile ranges (or "bandwidths") of 0.00 to 0.25 ("0-25% Contacts"), 0.25 to 0.50 ("25-50% Contacts"), 0.50 to 0.75 ("50-75% Contacts"), and 0.75 to 1.00 (75-100% Contacts). The four agents occupy equally-spaced percentile bandwidths and are assigned percentiles at the midpoints of their respective ranges: 0.00 to 0.25 ("0.125 Agent"), 0.25 to 0.50 ("0.375 Agent"), 0.50 to 0.75 ("0.625 Agent"), and 0.75 to 1.00 ("0.875 Agent"). The four agents may also be ordered by performance according to a desired metric (e.g., sales), such that the lowest-performing agent is assigned the lowest percentile (the 0.125 Agent), and the highest-performing agent is assigned the highest percentile (the 0.875 Agent).

By applying a diagonal strategy, 0-25% Contacts may be preferably assigned to the 0.125 Agent, 25-50% Contacts may be preferably assigned to the 0.375 Agent, 50-75% Contacts may be preferably assigned to the 0.625 Agent, and 75-100% Contacts may be preferably assigned to the 0.875 Agent. BP Strategy 210 targets a balanced utilization, with each agent receiving approximately the same proportion of contacts over time. Accordingly, there is no bias toward a PQ strategy, under which contact utilization would be skewed toward utilizing the highest-performing 75-100% Contacts more heavily.

One such technique for generating the performance-biased contact type percentiles according to embodiments of the present disclosure is to adjust each contact type's "initial" midpoint percentile ("$CP_{initial}$") by a hybridization function or factor, such that relatively higher-ordered (e.g., higher-performing) contacts occupy relatively larger bandwidths and, consequently, receive relatively more contacts than lower-ordered (e.g., lower-performing) contacts. For example, the hybridization function may raise each contact's percentile to a power, as in Equation 1 below:

$$CP_{adjusted} = CP_{initial}{}^{\rho} \qquad (Eqn. 1)$$

The power parameter (e.g., "p" or a "Rho parameter" as in Equation 1 may determine the amount of bias toward PQ, with higher values of Rho generating greater amounts of bias. A Rho parameter of 1.0 would generate no bias ($CP_{adjusted} = CP_{initial}$). Thus, this "neutral" value for Rho results in targeting a balanced contact utilization. In fact, BP Strategy 210 is equivalent to a Rho-based HBP strategy in which Rho equals 1.0. As Rho increases, the degree of contact utilization skew increases as bias toward PQ increases.

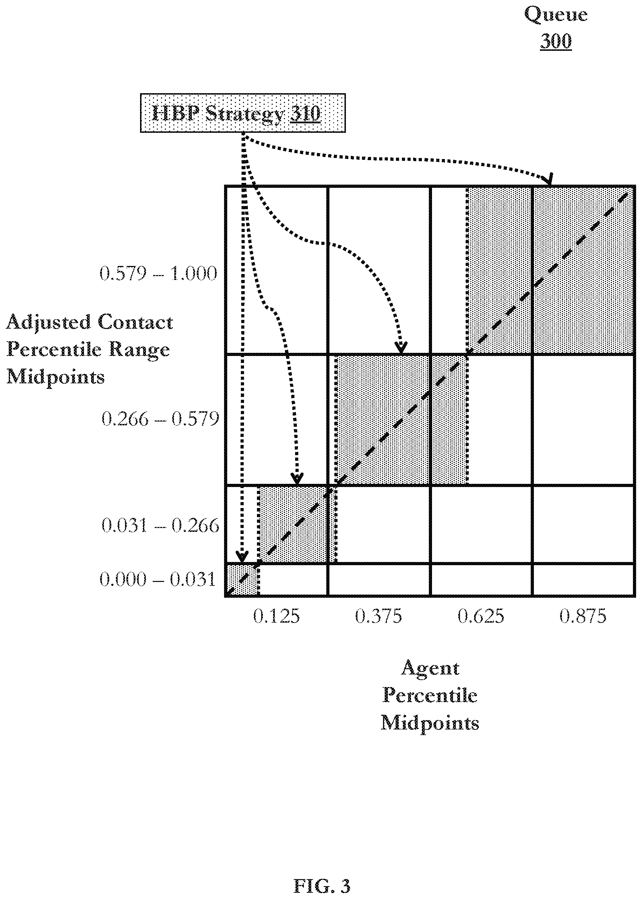

FIG. 3 shows a queue 300 that applies this technique using a Rho value of 2.0. Queue 300 represents the same four types of contacts and the same four agents as in queue 200. However, in queue 300, the contact types' percentile midpoints have been squared ($CP_{adjusted} = CP_{initial}{}^{2.0}$). Applying a diagonal strategy under HBP Strategy 310, the lowest-ordered contact type ($CP_{adjusted} \approx 0.016$) would occupy the smallest bandwidth and be selected least frequently, and so on, up to the highest-ordered contact type ($CP_{adjusted} \approx 0.766$), which would occupy the largest bandwidth and be selected most frequently.

In some embodiments, the bandwidth of each contact type may be determined so that each contact type's adjusted percentile midpoint is the midpoint of each contact type's new, adjusted bandwidth. For example, the bandwidth of the lowest-ordered 0.016 contact type may be approximately 0.000 to 0.031 In other embodiments, the bandwidth of each agent may be determined by equally distributing the "distance" between neighboring adjusted percentile midpoints. For example, the bandwidth of the lowest-ordered 0.016 contact type may be approximately 0.000 to 0.079.

Another variation of the HBP technique applied to queue 300 in FIG. 3 is to adjust each contact type's initial percentile ranges rather than each contact type's initial midpoint percentile, as in Equation 2 below:

$$CP_{adjusted\_range} = CP_{initial\_range}{}^{\rho} \quad (Eqn. 2)$$

The effect would be the same: relatively higher-ordered (e.g., higher value) contact types occupy relatively larger bandwidths and, consequently, are selected relatively more frequently than lower-ordered (*e.g.,* lower value) contact types.

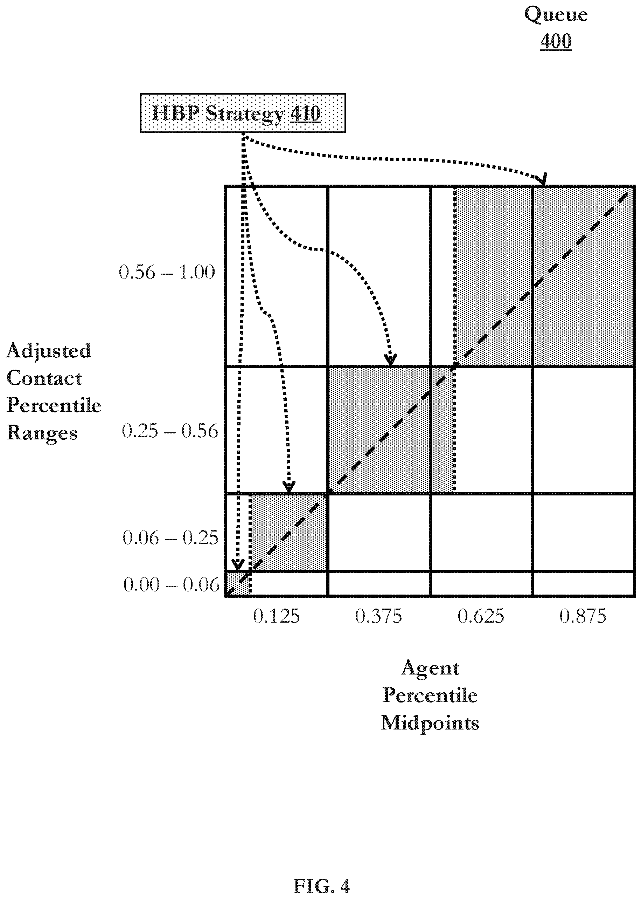

FIG. 4 shows a queue 400 that applies this technique using a Rho value of 2.0. Queue 400 represents the same four contact types and agents as in queue 300. However, in queue 400, the contact types' initial percentile ranges have been squared ($CP_{adjusted\_range} = CP_{initial\_range}^{2.0}$) instead of their initial midpoint percentiles. Applying a diagonal strategy under HBP Strategy 410, the lowest-ordered contact type (occupying adjusted percentile range from 0.00 to approximately 0.06 with a midpoint of approximately 0.03) would be selected least frequently, and so on, up to the highest-ordered contact type (occupying adjusted percentile range from approximately 0.56 to 1.00 with a midpoint of approximately 0.82), which would be selected most frequently.

Conceptually, the target skewed utilization would result in the highest-ordered contact type being selected a little less than half of the time, typically when one of the top-half of agents becomes available, and the lower-ordered contact types being selected a little more than half of the time, typically when one of the bottom-half of agents becomes available. Other techniques for visualizing or implementing these hybridization functions or factors include adjusting the "fitting function" of the diagonal strategy.

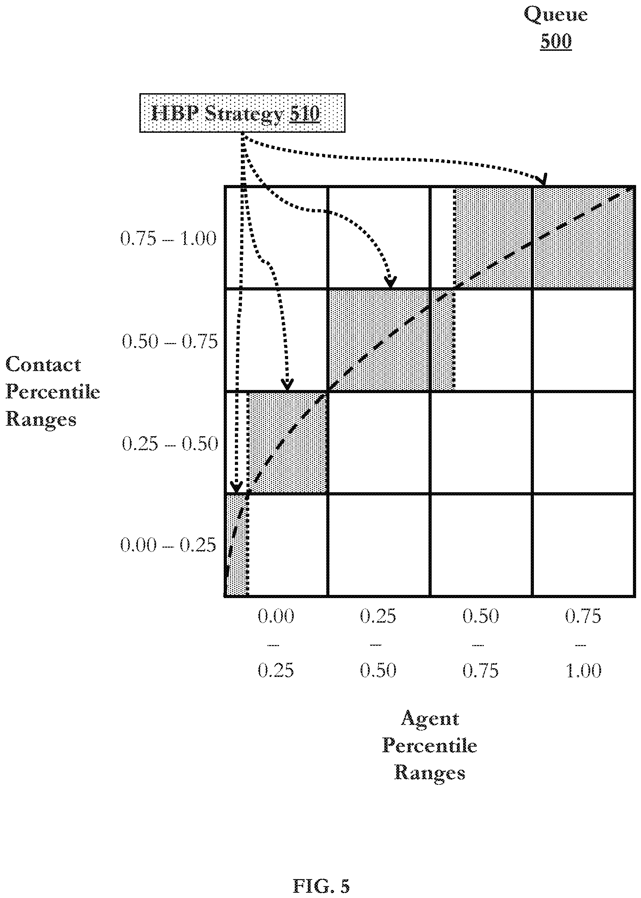

FIG. 5 shows a queue 500 with the same contact type percentiles and ranges as in queue 100 (FIG. 1), and they have not been adjusted. Unlike queue 100, in which BP Strategy 110 may be visualized by a 45-degree diagonal line (CP=AP), HBP strategy 510 may be visualized by a different, hybridized fitting function (*e.g.,* "bending" or "bowing" the diagonal line). In the example, of FIG. 5, the fitting function is an exponential function, as in Equation 3 below:

$$AP=CP^{\rho} \qquad\qquad (Eqn.\ 3)$$

Conceptually, instead of determining preferred pairings by selecting pairs closest to the diagonal AP=CP as in BP Strategy 110, preferred pairings in HBP Strategy 510 may be determined by selecting pairs closest to the exponential $AP=CP^{2.0}$ as in queue 500 where Rho equals 2.0. Notably, the effect of fitting to $AP=CP^{2.0}$ is the continuous mathematical analogue to the discontinuous process of broadening or shrinking percentile ranges (*e.g.,* squaring the percentile ranges and then fitting to AP=CP, as in queue 400 and HBP Strategy 410 (FIG. 4).

Many variations of hybridization functions may be used to vary the target utilization of an agent as a function of the agent's performance or other ordering or metric. For example, a hybridization function may be a piecewise function.

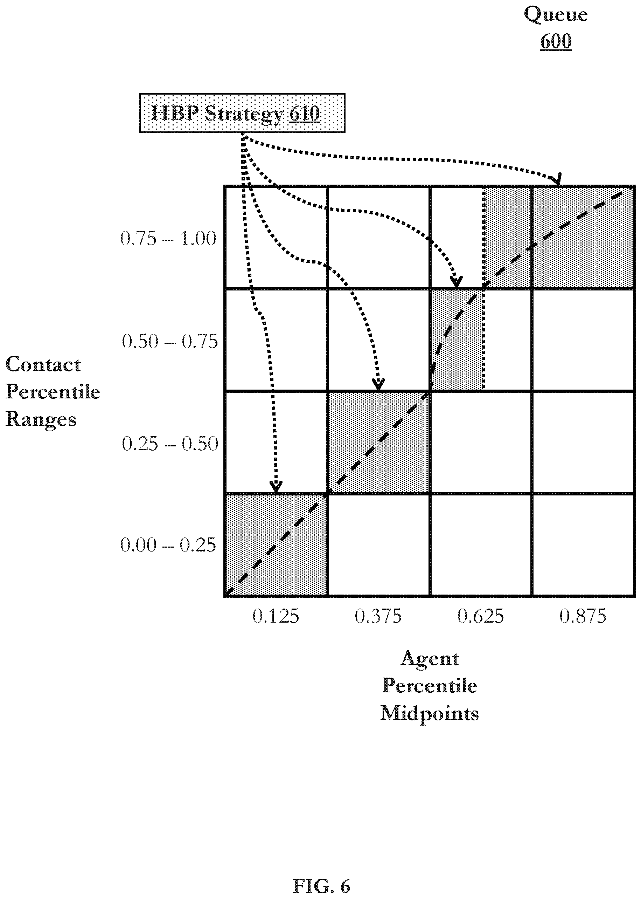

FIG. 6 shows a queue 600 and HBP Strategy 610 that affects the utilization of the bottom-half of the contact types differently than that of the top-half of the contact types. For example, the contact center may determine that half of the contacts should be distributed to below-average agents in a balanced manner (*e.g.,* Rho = 1.0), but the other half of the contacts should be distributed to above-average agents according to each contact type's relative ordering (*e.g.,* Rho > 1.0). Thus, contacts ranging from 0% to 50% may be distributed to the lower-performing agents (0.125 Agent and 0.375 Agent) evenly, visualized as a fit along the 45-degree line AP=CP for $0.00 \le CP < 0.50$ (or, *e.g.,* $0.00 < CP \le 0.50$, etc.). Contacts ranging from 50% to 100% may be distributed to the higher-performing agents (0.625 Agent and 0.875 Agent) as a function of their contact type's relative ordering (*e.g.,* value), such as an exponential function scaled to this portion of contacts and agents. HBP Strategy 610 may be visualized as a fit along the exponential curve $AP=2(CP-0.5)^{2.0}+0.5$ for Rho = 2.0 and $0.50 \le CP < 1.00$.

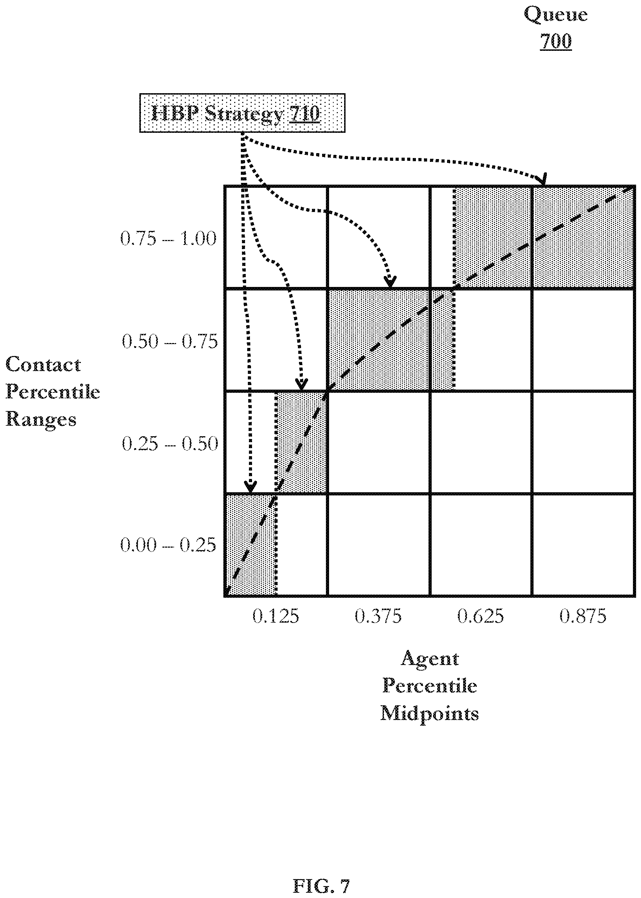

Incidentally, such a strategy would result in *some* higher-ordered contact types (here, the 0.50 to 0.75 contact type) being selected less frequently over time than its lower-ordered peers. FIG. 7 shows a queue 700 and HBP Strategy 710 that also affects the utilization of the bottom-half of the contacts differently than that of the top-half of the contacts using a piecewise hybridization function. For example, the contact center may determine that a larger portion of contacts should be distributed to above-average agents according to their relative ordering (*e.g.,* Rho > 1.0), and the remaining portion of contacts should be distributed to below-average agents in a balanced manner (e.g., Rho = 1.0). Thus, for Rho = 2.0 and $CP \ge 0.50$ (or CP > 0.50), pairings may be fit along the exponential curve $AP=CP^{2.0}$. For Rho = 1.0 and CP < 0.50, pairings may be fit along a linear function, scaled to this portion of contacts and agents: $AP=0.5 \cdot CP$.

In real-world contact centers, there may be more or fewer agents, and more or fewer contact types in a queue. In these examples, each contact type is evenly distributed within the total range of percentile ranks; however, in some contact centers, the distribution of ranges could vary based on, for example, the frequency at which contacts of a particular type arrive at a contact center relative to the frequency at which contacts of other types arrive. The simplified examples described above, with four agents and four contact types, are used to illustrate the effects of an implicit form of HBP such as those based on a Rho parameter and exponential scaling or other hybridization functions. However, HBP-including Rho-based techniques-may also be applied to bigger, more complex, real-world contact centers.

In some embodiments, Rho may be selected or adjusted to vary the bias toward PQ (or skew in contact utilization). For example, Rho less than 2.0 (*e.g.,* 1.0, 1.01, 1.1, 1.2, 1.5, etc.) would result in relatively less bias toward PQ than the examples above in which Rho equals 2.0. For example, if a contact center administrator wanted to avoid occurrences of higher-ordered contact types being selected multiple times while a lower-ordered contact type remains unselected, a significantly lower value of Rho may be more appropriate than 2.0. Conversely, Rho greater than 2.0 (*e.g.,* 2.01, 2.1, 2.5, 200.0, etc.) would result in relatively more bias toward PQ.

Importantly, the effect on contact utilization is subtle under Rho-based HBP strategies inasmuch as they controllably affect the degree to which contacts of differently ordered contact types wait for connection to an agent. By increasing the power to which contact percentiles are raised, this invention controllably decreases the average time between selections for higher-ordered contact types and increases the average time between selections for comparatively lower-ordered contact types. Similarly, reducing the power to which contact percentiles are raised has the reverse effect. For neutral BP strategies (*e.g.,* Rho = 1.0), each agent has approximately the same expected average waiting time between contacts. As Rho increases, the relative expected average waiting time progressively (*e.g.,* exponentially) decreases as relative contact type ordering (*e.g.,* contact type value) increases.

In some embodiments, an HBP strategy may target relative contact utilization using potentially more gradual techniques. For example, contact types may be assigned relative "utilization adjustments" based on contact type ordering. In one example, the highest-ordered contact type may be assigned a relative utilization adjustment of 100%, the second-highest contact type a relative utilization of 99%, the third 98%, and so on. In this example, the target utilization of the second-highest ordered contact type would be 99% of the target utilization of the highest-ordered contact type. The relative utilization adjustment may be more aggressive in other configurations. For example, the highest-ordered contact type may be assigned a relative utilization of 100%, the second-highest contact type 90%, the third 80%, and so on. In this example, the target utilization of the second-highest ordered contact type would be 90% of the target utilization of the highest-ordered contact type.

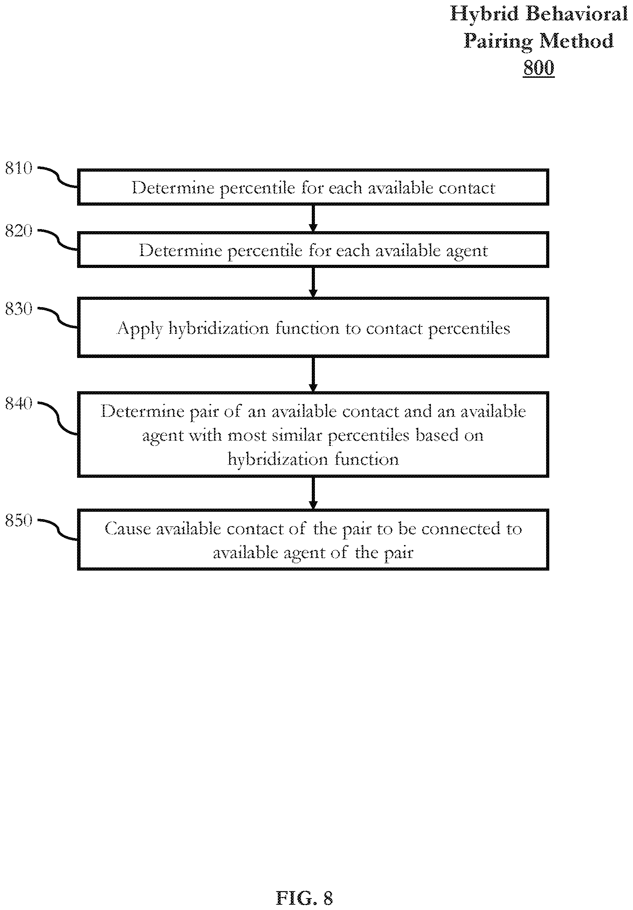

FIG. 8 shows a hybrid behavioral pairing method 800 according to embodiments of the present disclosure. At block 810, hybrid behavioral pairing method 800 may begin.

At block 810, a percentile (or *n*-tile, quantile, percentile range, bandwidth, or other type of "score" or range of scores, etc.) may be determined for each available contact. For situations in which contacts are waiting on hold in a queue, percentiles may be determined for each of the contacts waiting on hold in the queue. For situations in which contacts are not waiting on hold in a queue, a percentile may be assigned to the next contact to arrive at the contact center. The percentiles may be bounded by a range of percentiles defined for a particular type or group of contacts based on information about the contact. The percentile bounds or ranges may be based on a frequency distribution or other metric for the contact types. The percentile may be randomly assigned within the type's percentile range.

In some embodiments, percentiles may be ordered according to a particular metric or combination of metrics to be optimized in the contact center, and a contact determined to have a relatively high percentile may be considered to be a "higher-value" contact for the contact center inasmuch as these contacts are more likely to contribute to a higher overall performance in the contact center. For example, a relatively high-percentile contact may have a relatively high likelihood of making a purchase.

In some embodiments, a percentile may be determined for a contact at the time the contact arrives at the contact center. In other embodiments, a percentile may be determined for the contact at a later point in time, such as when the contact arrives at a particular skill queue or ACD system, or when a request for a pairing is made.

After a percentile has been determined for each contact available for pairing, behavioral pairing method 800 may proceed to block 820. In some embodiments, block 820 may be performed prior to, or simultaneously with, block 810.

At block 820, a percentile may be determined for each available agent. For situations in which agents are idle, waiting for contacts to arrive, percentiles may be determined for each of the idle agents. For situations in which agents for a queue are all busy, a percentile may be determined to the next agent to become available. The percentiles may be bounded by a range of percentiles (*e.g.,* "bandwidth") defined based on all of agents assigned to a queue (*e.g.,* a skill queue) or only the available agents assigned to a particular queue. In some embodiments, the bounds or ranges of percentiles may be based on a desired agent utilization (*e.g.,* for fairness, efficiency, or performance).

In some embodiments, agent percentiles may be ordered according to a particular metric or combination of metrics to be optimized in the contact center, and an agent determined to have a relatively high percentile may be considered to be a higher-performing agent for the contact center. For example, a relatively high-percentile agent may have a relatively high likelihood of making a sale.

In some embodiments, an agent's percentile may be determined at the time the agent becomes available within the contact center. In other embodiments, a percentile may be determined at a later point in time, such as when a request for a pairing is made.

After a percentile has been determined for each available agent and contact, behavioral pairing method 800 may proceed to block 830.

At block 830, a hybridization function may be applied to contact type percentiles (or contact type percentile ranges or bandwidths). For example, a Rho value may be determined for an exponential hybridization function or fitting curve or line. In some embodiments, the hybridization function may act on a single ordering that implicitly incorporates both behavioral fit and performance information. In other embodiments, the hybridization function may combine (*e.g.,* add, multiply, weight) multiple orderings of contact types. After the hybridization function has been applied or otherwise determined or configured, hybrid behavioral pairing method 800 may proceed to block 840.

At block 840, a pair of an available contact and an available agent may be determined based on the percentiles (or percentile ranges) determined for each available contact at block 810 and for each available agent at block 820 based on a hybridization function. In some embodiments, the selection may be determined based on percentiles or percentile ranges for each waiting contact or contact type adjusted at block 830. In some embodiments, the pair may be determined according to a diagonal strategy, in which contacts and agents with more similar percentiles (or the most similar percentiles) may be selected for pairing. For example, a hybrid behavioral pairing module may select a contact-agent pairing with the smallest absolute difference between the contact's score and the agent's score. In some embodiments, the diagonal strategy may be visualized as a 45-degree diagonal line. In other embodiments, the diagonal strategy may be visualized as a hybridization function (e.g., an exponential function, or a piecewise function).

In some situations, multiple agents may be idle when a contact arrives (an L1 state). Under HBP, the newly available contact may be paired with a selected one of the available agents that has a percentile or percentile range more similar to the contact's adjusted percentile than other available agents. In other situations, multiple contacts may be waiting in a queue when an agent becomes available (an L2 state). Under HBP, the newly available agent may be paired with a selected one of the contacts waiting in the queue that has an adjusted percentile more similar to the agent's percentile or percentile range than other contacts waiting in the queue.

In some situations, selecting a pairing based on similarity of scores may result in selecting an instant pairing that might not be the highest performing instant pairing, but rather increases the likelihood of better future pairings.

After a pairing has been determined at block 840, hybrid behavioral pairing method 800 may proceed to block 850. At block 850, modules within the contact center system may cause the contact and agent of the contact-agent pair to be connected with one another. For example, a behavioral pairing module may indicate that an ACD system or other routing device may distribute a particular contact to a particular agent.

After connecting the contact and agent at block 850, behavioral pairing method 800 may end. In some embodiments, behavioral pairing method 800 may return to block 840 for determining one or more additional pairings (not shown). In other embodiments, behavioral pairing method 800 may return to block 810 or block 820 to determine (or re-determine) percentiles or percentile ranges for available contacts or agents (not shown), and subsequently apply (or reapply) a hybridization function at block 840.

At this point it should be noted that hybrid behavioral pairing in a contact center system in accordance with the present disclosure as described above may involve the processing of input data and the generation of output data to some extent. This input data processing and output data generation may be implemented in hardware or software. For example, specific electronic components may be employed in a behavioral pairing module or similar or related circuitry for implementing the functions associated with behavioral pairing in a contact center system in accordance with the present disclosure as described above. Alternatively, one or more processors operating in accordance with instructions may implement the functions associated with behavioral pairing in a contact center system in accordance with the present disclosure as described above. If such is the case, it is within the scope of the present disclosure that such instructions may be stored on one or more non-transitory processor readable storage media (e.g., a magnetic disk or other storage medium), or transmitted to one or more processors via one or more signals embodied in one or more carrier waves.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Further, although the present disclosure has been described herein in the context of at least one particular implementation in at least one particular environment for at least one particular purpose, those of ordinary skill in the art will recognize that its usefulness is not limited thereto and that the present disclosure may be beneficially implemented in any number of environments for any number of purposes.

**Claims**

1. A method for pairing in a contact center system (100), the contact center system comprising at least one switch (120A, 120B) communicatively coupled to a plurality of agents (130A, 130B, 130C, 130D), the method comprising:

   determining (820), by at least one processor, a percentile for an agent of the plurality of agents;
   determining (810), by the at least one processor, a percentile for each of a plurality of contacts;
   applying (830), by the at least one processor, a hybridization function to each of the percentiles of the plurality of contacts to adjust the percentile of each of the plurality of contacts based on a behavioral pairing strategy for pairing and a priority queueing strategy for pairing, wherein the hybridization function biases the behavioral pairing strategy for pairing toward the priority queuing strategy for pairing;

comparing (840), by the at least one processor, a first difference in percentile between the percentile of the agent and the adjusted percentile of a first contact in a first pair with a second difference in percentile between the percentile of the agent and the adjusted percentile of a second contact different from the first contact in a second pair; and

selecting (850), by the at least one processor, the first pair or the second pair for connection based on the comparing.

2. The method of claim 1, wherein selecting the first pair or the second pair based on the comparing further comprises applying, by the at least one processor, a diagonal strategy to the percentiles such that the pair with more similar percentiles is selected.

3. The method of claim 1, wherein the percentile of the agent or the percentile of each of the plurality of contacts is expressed as a percentile range.

4. The method of claim 3, wherein each of the plurality of contacts is assigned a percentile within each contact's respective percentile range.

5. The method of claim 4, wherein an assigned percentile is a midpoint of a percentile range.

6. The method of claim 4, wherein an assigned percentile is a random percentile of a percentile range.

7. The method of claim 1, further comprising determining, by the at least one processor, a percentile range for the agent proportionate to a relative performance of the agent.

8. The method of claim 1, wherein the hybridization function enables controllably targeting, by the at least one processor, an unbalanced contact utilization.

9. The method of claim 8, wherein applying the hybridization function further comprises determining, by the at least one processor, a larger percentile range for each successively higher-percentiled contact type of a plurality of contact types than respective lower-percentiled contact types.

10. The method of claim 1, wherein a selected contact or contact type of the selected pair is not any of:

a contact or contact type lagging in a fairness metric,

a contact or contact type rated highest in a value, priority, or performance metric,

a contact or contact type rated highest in a value, priority, or performance metric for a particular agent, or

a contact previously assigned to the agent of the selected pair.

11. The method of claim 1, wherein a higher-percentiled agent remains available for subsequent assignment to a similarly higher-percentiled contact, or a higher-percentiled contact remains available for subsequent assignment to a similarly higher-percentiled agent.

12. The method of claim 1, wherein each successively higher-percentiled contact of the plurality of contacts is more likely to be selected than respectively lower-percentiled contacts.

13. The method of claim 1, wherein each successively higher-percentiled contact of the plurality of contacts comprises a lower average waiting time than respectively lower-percentiled contacts.

14. A system (140) for pairing in a contact center system (100), the contact center system comprising at least one switch (120A, 120B) communicatively coupled to a plurality of agents (130A, 130B, 130C, 130D), and the system (140) comprising at least one processor, wherein the at least one processor is configured to perform the method of any preceding claim.

**Patentansprüche**

1. Verfahren zum Paaren in einem Kontaktcentersystem (100), wobei das Kontaktcentersystem mindestens einen Switch (120A, 120B) umfasst, der kommunikativ mit mehreren Agenten (130A, 130B, 130C, 130D) gekoppelt ist, wobei das Verfahren umfasst:

Bestimmen (820) eines Perzentils für einen Agenten der mehreren Agenten durch mindestens einen Prozessor;

Bestimmen (810) eines Perzentils für jeden von mehreren Kontakten durch den mindestens einen Prozessor;

Anwenden (830) einer Hybridisierungsfunktion auf jedes der Perzentile der mehreren Kontakte durch den mindestens einen Prozessor, um das Perzentil jedes der mehreren Kontakte basierend auf einer Verhaltenspaarungsstrategie für die Paarung und einer Prioritätswarteschlangenstrategie für die Paarung anzupassen, wobei die Hybridisierungsfunktion die Verhaltenspaarungsstrategie für die Paarung in Richtung der Prioritätswarteschlangenstrategie für die Paarung beeinflusst;

Vergleichen (840) einer ersten Perzentildifferenz zwischen dem Perzentil des Agenten und dem angepassten Perzentil eines ersten Kontakts in einem ersten Paar mit einer zweiten Perzentildifferenz zwischen dem Perzentil des Agenten und dem angepassten Perzentil eines zweiten Kontakts, der sich von dem ersten Kontakt in einem zweiten Paar unterscheidet, durch den mindestens einen Prozessor; und

Auswählen (850) des ersten Paares oder des zweiten Paares für die Verbindung durch den mindestens einen Prozessor basierend auf dem Vergleich.

2. Verfahren nach Anspruch 1, wobei das Auswählen des ersten Paares oder des zweiten Paares basierend auf dem Vergleich ferner das Anwenden einer diagonalen Strategie auf die Perzentile durch den mindestens einen Prozessor umfasst, so dass das Paar mit ähnlicheren Perzentilen ausgewählt wird.

3. Verfahren nach Anspruch 1, wobei das Perzentil des Agenten oder das Perzentil jedes der mehreren Kontakte als Perzentilbereich ausgedrückt wird.

4. Verfahren nach Anspruch 3, wobei jedem der mehreren Kontakte ein Perzentil innerhalb des jeweiligen Perzentilbereichs jedes Kontakts zugeordnet ist.

5. Verfahren nach Anspruch 4, wobei ein zugeordnetes Perzentil ein Mittelpunkt eines Perzentilbereichs ist.

6. Verfahren nach Anspruch 4, wobei ein zugeordnetes Perzentil ein zufälliges Perzentil eines Perzentilbereichs ist.

7. Verfahren nach Anspruch 1, ferner umfassend das Bestimmen durch den mindestens einen Prozessor eines Perzentilbereichs für den Agenten, der proportional zu einer relativen Leistung des Agenten ist.

8. Verfahren nach Anspruch 1, wobei die Hybridisierungsfunktion ein steuerbares Targeting einer unausgeglichenen Kontaktnutzung durch den mindestens einen Prozessor ermöglicht.

9. Verfahren nach Anspruch 8, wobei das Anwenden der Hybridisierungsfunktion ferner das Bestimmen eines größeren Perzentilbereichs für jeden Kontakttyp mit aufeinanderfolgend höherem Perzentil mehrerer Kontakttypen durch den mindestens einen Prozessor als die jeweiligen Kontakttypen mit niedrigerem Perzentil umfasst.

10. Verfahren nach Anspruch 1, wobei ein ausgewählter Kontakt oder Kontakttyp des ausgewählten Paares nicht einer der folgenden ist:

ein Kontakt oder Kontakttyp, der in einer Fairness-Metrik nachhinkt,
ein Kontakt oder Kontakttyp, der in einer Wert-, Prioritäts- oder Leistungsmetrik am höchsten bewertet ist,
einen Kontakt oder Kontakttyp, der in einer Wert-, Prioritäts- oder Leistungskennzahl für einen bestimmten Agenten am höchsten bewertet ist, oder
ein Kontakt, der zuvor dem Agenten des ausgewählten Paares zugeordnet war.

11. Verfahren nach Anspruch 1, wobei ein Agent mit höherem Perzentil für eine nachfolgende Zuordnung zu einem Kontakt mit ähnlich höherem Perzentil verfügbar bleibt, oder ein Kontakt mit höherem Perzentil für eine nachfolgende Zuordnung zu einem Agenten mit ähnlich höherem Perzentil verfügbar bleibt.

12. Verfahren nach Anspruch 1, wobei jeder aufeinanderfolgend Kontakt mit einem höheren Perzentil der mehreren Kontakte wahrscheinlicher ausgewählt wird als jeweils ein Kontakt mit einem niedrigeren Perzentil.

13. Verfahren nach Anspruch 1, wobei jeder aufeinanderfolgende Kontakt mit höherem Perzentil der mehreren Kontakte eine niedrigere durchschnittliche Wartezeit umfasst als jeweilige Kontakte mit niedrigerem Perzentil.

14. System (140) zum Paaren in einem Kontaktcentersystem (100), wobei das Kontaktcentersystem mindestens einen Switch (120A, 120B) umfasst, der kommunikativ mit mehreren Agenten (130A, 130B, 130C, 130D) gekoppelt ist, und das System (140) mindestens einen Prozessor umfasst, wobei der mindestens eine Prozessor dazu ausgelegt ist, das Verfahren eines der vorhergehenden Ansprüche auszuführen.

**Revendications**

1. Procédé d'appariement dans un système de centre de contact (100), le système de centre de contact comprenant au moins un commutateur (120A, 120B) couplé en communication à une pluralité d'agents (130A, 130B, 130C, 130D), le procédé comprenant :

la détermination (820), par au moins un processeur, d'un percentile pour un agent de la pluralité d'agents ;
la détermination (810), par l'au moins un processeur, d'un percentile pour chacun d'une pluralité de contacts ;

l'application (830), par l'au moins un processeur, d'une fonction d'hybridation à chacun des percentiles de la pluralité de contacts pour ajuster le percentile de chacun de la pluralité de contacts sur la base d'une stratégie d'appariement comportemental pour l'appariement et d'une stratégie prioritaire pour l'appariement, la fonction d'hybridation sollicitant la stratégie d'appariement comportemental pour l'appariement vers la stratégie prioritaire pour l'appariement ;

la comparaison (840), par l'au moins un processeur, d'une première différence de percentile entre le percentile de l'agent et le percentile ajusté d'un premier contact dans une première paire avec une seconde différence de percentile entre le percentile de l'agent et le percentile ajusté d'un second contact différent du premier contact dans une seconde paire ; et

la sélection (850), par l'au moins un processeur, de la première paire ou de la seconde paire pour la connexion sur la base de la comparaison.

2. Procédé selon la revendication 1, la sélection de la première paire ou de la seconde paire sur la base de la comparaison comprenant en outre l'application, par l'au moins un processeur, d'une stratégie diagonale aux percentiles de telle sorte que la paire avec des percentiles plus similaires est sélectionnée.

3. Procédé selon la revendication 1, le percentile de l'agent ou le percentile de chacun de la pluralité de contacts étant exprimé comme une plage de percentiles.

4. Procédé selon la revendication 3, chacun de la pluralité de contacts se voyant attribuer un percentile à l'intérieur de la plage de percentiles respective de chaque contact.

5. Procédé selon la revendication 4, un percentile attribué étant un point médian d'une plage de percentiles.

6. Procédé selon la revendication 4, un percentile attribué étant un percentile aléatoire d'une plage de percentiles.

7. Procédé selon la revendication 1, comprenant en outre la détermination, par l'au moins un processeur, d'une plage de percentiles pour l'agent proportionnelle à des performances relatives de l'agent.

8. Procédé selon la revendication 1, la fonction d'hybridation permettant de cibler de manière contrôlable, par l'au moins un processeur, une utilisation de contact non équilibrée.

9. Procédé selon la revendication 8, l'application de la fonction d'hybridation comprenant en outre la détermination, par l'au moins un processeur, d'une plage de percentiles plus grande pour chaque type de contact à percentile successivement supérieur d'une pluralité de types de contact que les types de contact à percentile inférieur respectifs.

10. Procédé selon la revendication 1, un contact sélectionné ou un type de contact de la paire sélectionnée n'étant pas l'un quelconque de :

un contact ou un type de contact à décalage dans une mesure d'équité,
un contact ou un type de contact ayant obtenu la cote la plus élevée pour une valeur, une priorité ou une mesure des performances,
un contact ou un type de contact ayant obtenu la cote la plus élevée pour une valeur, une priorité ou une mesure des performances pour un agent particulier, ou
un contact précédemment attribué à l'agent de la paire sélectionnée.

11. Procédé selon la revendication 1, un agent ayant un percentile plus élevé restant disponible pour une attribution ultérieure à un contact ayant un percentile similairement plus élevé, ou un contact ayant un percentile plus élevé restant disponible pour une attribution ultérieure à un agent ayant un percentile similairement plus élevé.

12. Procédé selon la revendication 1, chaque contact à percentile successivement plus élevé de la pluralité de contacts étant plus susceptible d'être sélectionné que les contacts à percentile respectivement plus faible.

13. Procédé selon la revendication 1, chaque contact à percentile successivement supérieur de la pluralité de contacts comprenant un temps d'attente moyen inférieur à celui des contacts à percentile respectivement inférieur.

14. Système (140) pour l'appariement dans un système de centre de contact (100), le système de centre de contact comprenant au moins un commutateur (120A, 120B) couplé en communication à une pluralité d'agents (130A, 130B, 130C, 130D), et le système (140) comprenant au moins un processeur, l'au moins un processeur étant configuré pour réaliser le procédé selon n'importe quelle revendication précédente.

**Contact Center System**
**100**

FIG. 1

FIG. 2

FIG. 3

Queue
400

HBP Strategy 410

Adjusted
Contact
Percentile
Ranges

0.56 – 1.00

0.25 – 0.56

0.06 – 0.25

0.00 – 0.06

0.125    0.375    0.625    0.875

Agent
Percentile
Midpoints

FIG. 4

FIG. 5

Queue
600

HBP Strategy 610

Contact
Percentile
Ranges

0.75 – 1.00

0.50 – 0.75

0.25 – 0.50

0.00 – 0.25

0.125        0.375        0.625        0.875

Agent
Percentile
Midpoints

FIG. 6

FIG. 7

Hybrid Behavioral
Pairing Method
800

810 — Determine percentile for each available contact

820 — Determine percentile for each available agent

830 — Apply hybridization function to contact percentiles

840 — Determine pair of an available contact and an available agent with most similar percentiles based on hybridization function

850 — Cause available contact of the pair to be connected to available agent of the pair

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014341370 A1
- US 2013251137 A1